# EUROPÄISCHE PATENTSCHRIFT

(11) **EP 0 886 544 B1**
(45) Veröffentlichungstag und Bekanntmachung des Hinweises auf die Patenterteilung: **09.05.2001**
(21) Anmeldenummer: 97918022.1
(22) Anmeldetag: 13.03.1997
(51) Int. Cl.: B01L 7/00, G02B 21/34, G01N 27/447

(54) **VORRICHTUNG ZUR UNTERSUCHUNG VON BIOLOGISCHEN UND MEDIZINISCHEN PROBEN**
DEVICE FOR ANALYSING BIOLOGICAL AND MEDICAL SPECIMENS
DISPOSITIF POUR ANALYSE D'ECHANTILLONS BIOLOGIQUES ET MEDICAUX

(30) Priorität: 15.03.1996 DE 19610146
(43) Veröffentlichungstag der Anmeldung: 30.12.1998
(73) Patentinhaber: November AG Gesellschaft für Molekulare Medizin, 91056 Erlangen (DE)
(72) Erfinder: BERTLING, Wolf, 91056 Erlangen (DE)
(74) Vertreter: Gassner, Wolfgang, Dr.
(86) Internationale Anmeldenummer: DE9700513
(87) Internationale Veröffentlichungsnummer: WO9734699

(56) Entgegenhaltungen:
- EP-A- 0 662 345
- EP-A- 0 687 502
- WO-A-91/07486
- WO-A-93/19207
- DE-A- 3 736 027
- DE-A- 4 409 436
- DE-C- 4 305 405
- DE-U- 9 112 403
- DE-U- 9 203 917
- FR-A- 2 718 253

## Beschreibung

Die Erfindung betrifft eine Vorrichtung nach dem Oberbegriff des Anspruchs 1.

Vorrichtungen zur Untersuchung von biologischen oder medizinischen Proben haben den Nachteil, daß es aus der Luft zum ungewollten Eintrag von humanen Material wie Gewebe, Haare oder sonstigen Epithelzellen in die zu untersuchende Probe kommen kann. Gerade bei der Analyse humaner Nucleinsäuren muß aber besonders darauf geachtet werden, daß eine solche Kontamination vermieden wird.

Eine gattungsgemäße Vorrichtung ist aus der DE 43 05 405 C1 bekannt. Dabei ist ein Deckel zum dichten Verschließen einer Perfusionskammer vorgesehen. Die Perfusionskammer weist einen Einlaß und einen Auslaß für Perfusionsflüssigkeit auf.

In der EP 0 210 071 ist ein Objektträger für die Mikroskopie beschrieben, der einen Deckel aufweist. Der Abstand des Dekkels zur Bodenplatte wird durch Abstandshalter kontrolliert.

Aufgabe der vorliegenden Erfindung ist es, eine Vorrichtung mit einem Deckel anzugeben, bei der eine parallele Anordnung des Deckels zum Boden gewährleistet ist.

Diese Aufgabe wird durch die Merkmale des Anspruchs 1 gelöst. Zweckmäßige Weiterbildungen ergeben sich aus den Merkmalen der Ansprüche 2 bis 11.

Nach Maßgabe der Erfindung ist vorgesehen, daß der Deckel an der dem Präparationsraum zugewandten Innenseite einen Vorsprung mit Abstandshaltern aufweist, über die der Deckel im geschlossenen Zustand gegen den Boden des Grundkörpers abstützbar ist. - Damit kann eine Kontamination des Probenmaterials vermieden werden. Gleichzeitig ist es möglich, das Probenmaterial bsp. mit zur Untersuchung notwendigen Reagenzien bzw. Substanzen zu behandeln. Die Beobachtung des Probenmaterials beeinträchtigende Lufteinschlüsse unterhalb des Deckels werden vermieden. Die parallele Anordnung des Deckels zum Boden ist gewährleistet.

Zweckmäßigerweise ist der Deckel ein zumindest abschnittsweise durchsichtig ausgebildeter mit dem Grundkörper schwenkbar verbundener Deckel. Der Grundkörper selbst kann zumindest abschnittsweise aus lichtdurchlässigem Material hergestellt sein. Damit ist es möglich, die erfindungsgemäße Vorrichtung sowohl für auflicht- als auch für durchlichtmikroskopische Analysemethoden zu verwenden.

Um eine Kontamination der Probe vollständig auszuschließen, kann die erste Durchführung vorzugsweise verschließbar ausgebildet sein. Zu diesem Zweck kann die Durchführung beispielsweise auch mit einem in Form einer automatisch verschließenden Kupplung gebildeten Anschluß versehen sein.

Der Boden des Grundkörpers ist geeigneterweise aus einem Material hergestellt, dessen Wärmeleitfähigkeit höher als die des Materials des Deckels ist. Der Boden ist dabei vorzugsweise aus Metall wie Aluminium oder einem Edelmetall wie Gold hergestellt. Um die für die Untersuchung geeignete Reaktionstemperatur einzustellen, kann der Boden eine Heiz- und/oder

Kühleinrichtung aufweisen. Für spezielle Anwendungen ist auch daran gedacht, den Boden mit besonderen Beschichtungen wie einer Silanisierung zu versehen.

Die Höhe des Präparationsraums beträgt vorzugsweise 0,01 - 10mm. Die Länge des Präparationsraums liegt im Bereich zwischen 5 - 150mm, die Breite im Bereich zwischen 1 - 50mm. Das Volumen kann von 1µl - 1ml betragen.

Eine besonders universelle Ausführung der erfindungsgemäßen Vorrichtung besteht darin, am Grundkörper Elektroden oder

Kondensatorplatten vorzusehen. Diese können so angeordnet sein, daß sie direkt mit dem Präparationsraum in Kontakt sind. Zweckmäßigerweise sind die Elektroden oder Kondensatorplatten in gegenüberliegender Anordnung im Grundkörper vorgesehen. Sie sind bevorzugterweise aus Edelmetallen wie Platin, Gold oder ähnlichem hergestellt.

Nach einem weiteren Ausgestaltungsmerkmal kann im Präparationsraum ein Gelblock vorgesehen sein, der einen durch eine permeable Barriere getrennten Präparationsbereich aufweist. Diese Ausgestaltungsform der Erfindung dient der Durchführung elektrophoretischer Analysen. Dabei kann mindestens eine zweite Durchführung vorgesehen sein, durch die bei geschlossenem Deckel Substanz in den Präparationsbereich einschleusbar bzw. aus diesem entfernbar ist.

In der Zeichnung sind bevorzugte Ausführungsbeispiele der Erfindung dargestellt.

### Es zeigen:

- Fig. 1: eine perspektivische Ansicht eines ersten Ausführungsbeispiels,
- Fig. 2: einen Querschnitt gemäß der Schnittlinie A-A' in Fig. 1, wobei ein Deckel der Vorrichtung geschlossen ist,
- Fig. 3: einen Querschnitt gemäß Fig. 2, wobei der Deckel geöffnet ist,
- Fig. 4: eine perspektivische Ansicht eines zweiten Ausführungsbeispiels,
- Fig. 5: ein drittes Ausführungsbeispiel im Querschnitt,
- Fig. 6: ein viertes Ausführungsbeispiel in Draufsicht,
- Fig. 7: ein fünftes Ausführungsbeispiel im Querschnitt,
- Fig. 8: ein sechstes Ausführungsbeispiel in Draufsicht und
- Fig. 9: ein siebtes Ausführungsbeispiel im Querschnitt.

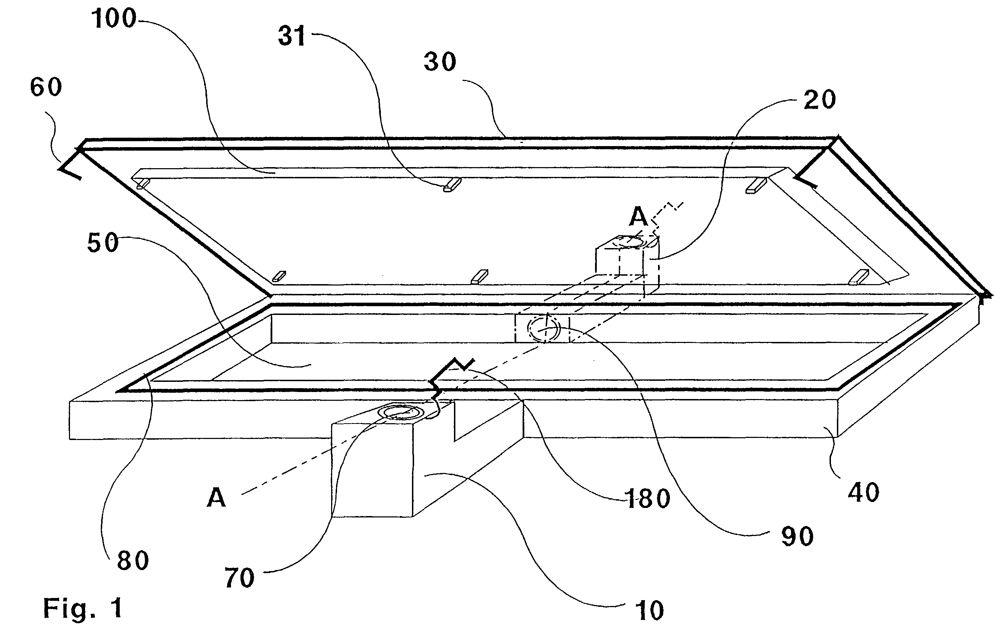

In Fig. 1 ist ein erstes Ausführungsbeispiel der Erfindung gezeigt. Ein aus lichtdurchlässigem Kunststoff gefertigter kastenartiger Grundkörper 40 weist im Inneren einen Präparationsraum 50 auf, der mit einem aus durchsichtigem Kunststoff hergestellten Deckel 30 verschließbar ist. Der Deckel 30 weist an der dem Präparationsraum 50 zugewandten Innenseite einen Vorsprung 100 auf, der randlich mit Abstandshaltern 31 versehen ist. An zwei Ecken des Deckels 30 sind hakenartige Verriegelungselemente 60 angespritzt. An der Kontaktfläche zwischen dem Deckel 30 und dem Grundkörper 40 ist eine umlaufende Dichtung 80 vorgesehen.

Die Vorrichtung weist ferner einen ersten 10 und einen zweiten Stutzen 20 auf, deren Außenöffnungen 70 jeweils mit einem Schnappdeckel 180 verschließbar sind. Der erste 10 und der zweite Stutzen 20 münden jeweils in einer Innenöffnung 90 in den Präparationsraum 50.

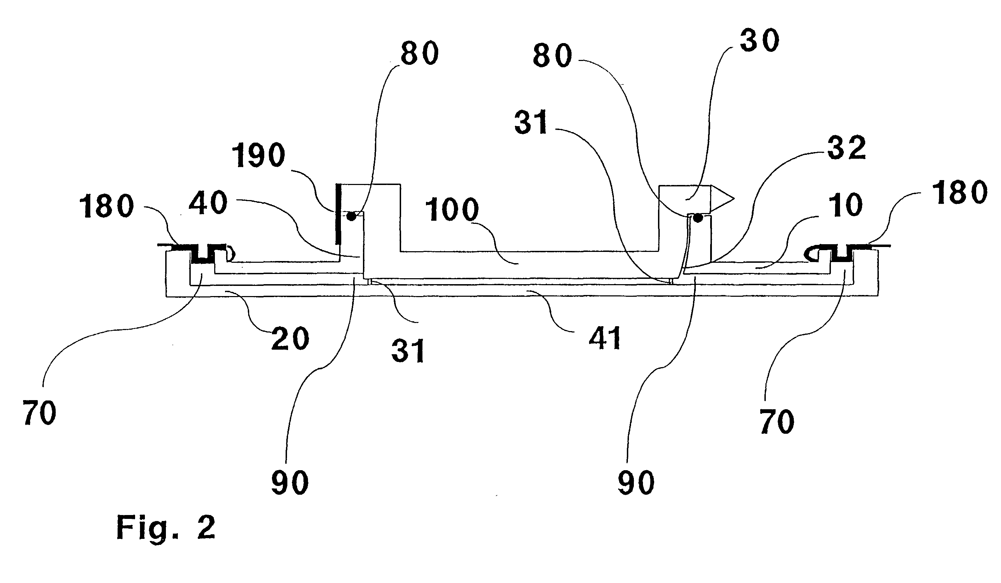

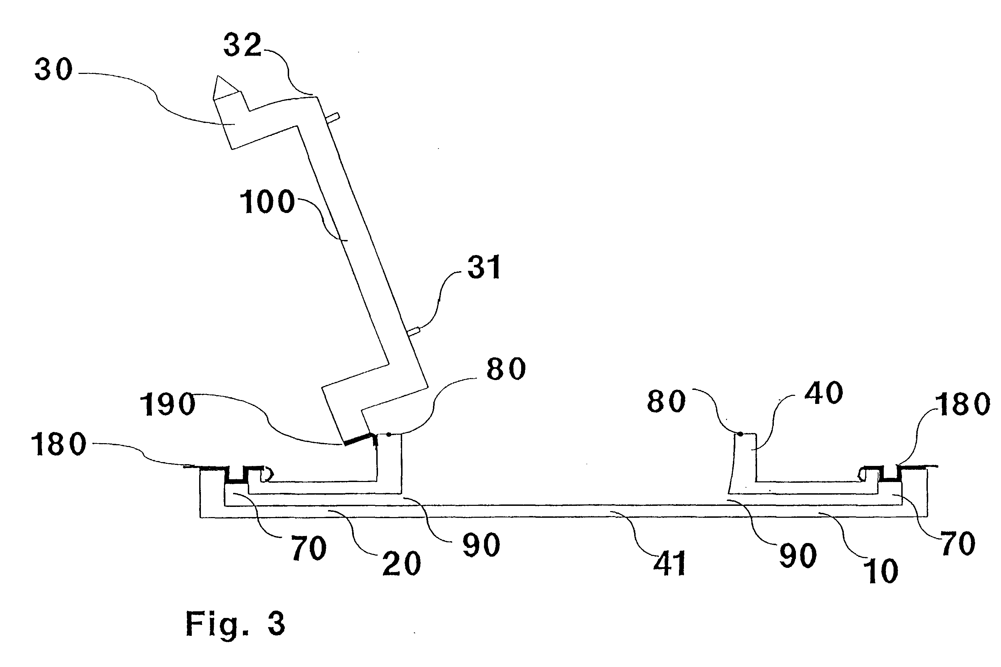

Wie aus den Fig. 2 und 3 ersichtlich ist, ist der Deckel 30 mittels eines Scharniers 190, das vorzugsweise als Filmscharnier ausgebildet sein kann, schwenkbar am Grundkörper 40 gehalten. Der Vorsprung 100 ist über die Abstandshalter 31 gegen einen Boden 41 des Grundkörpers 40 abgestützt. - Der Deckel an der dem Scharnier 190 gegenüberliegenden Seite weist einen Radius 32 auf.

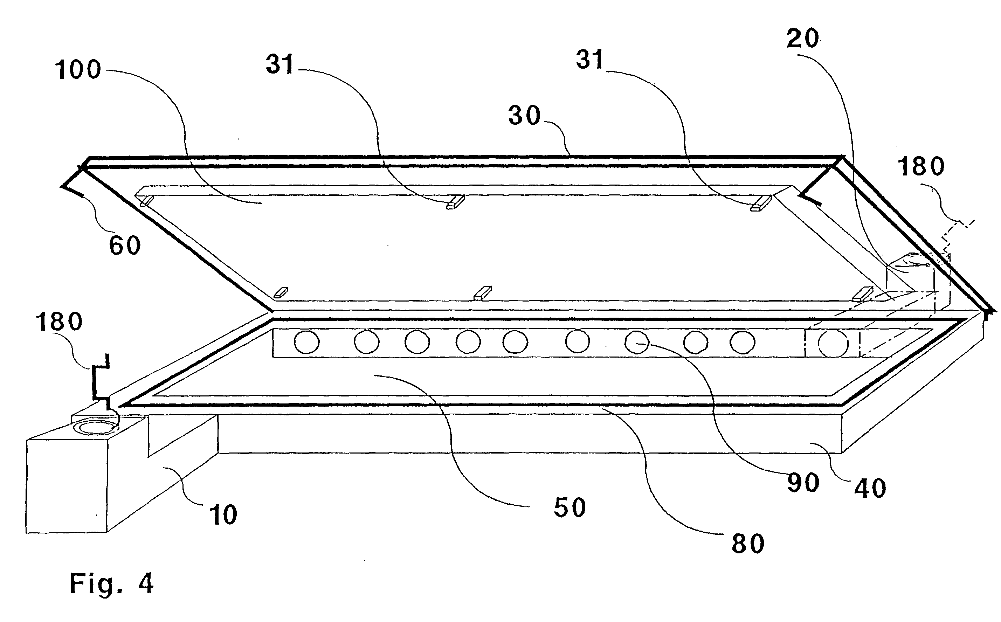

Bei dem in Fig. 4 gezeigten zweiten Ausführungsbeispiel ist der zweite Stutzen 20 über eine Mehrzahl von Innenöffnungen 90 mit dem Präparationsraum 50 verbunden.

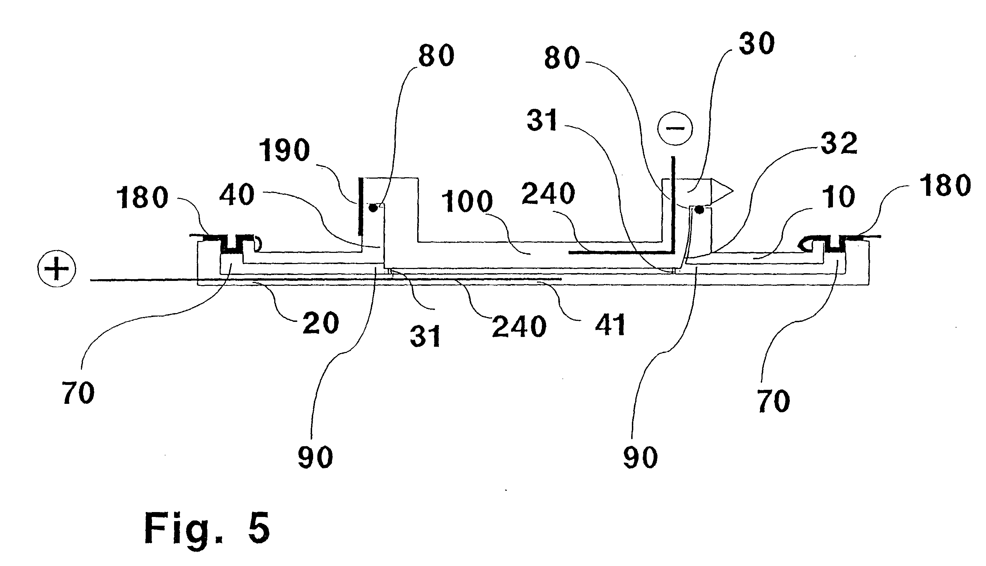

Wie in Fig. 5 dargestellt ist, kann der Deckel 30 und der Boden 41 mit Elektroden 240 versehen sein.

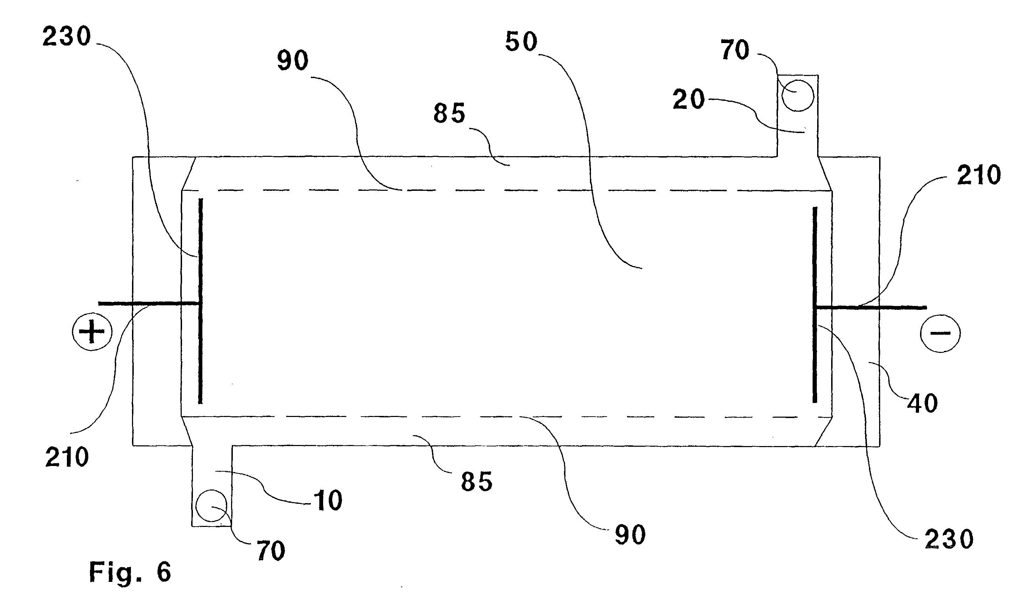

Bei dem in Fig. 6 dargestellten vierten Ausführungsbeispiel sind mit Anschlüssen 210 versehene Kondensatorplatten 230 im Bereich der gegenüberliegenden kurzen Innenwände des Präparationsraums 50 angeordnet. Der erste 10 und der zweite Stutzen 20 steht jeweils mit einem im Bereich der langen Seitenwände des Grundkörpers 40 verlaufenden Reagenzkanal 85 in Verbindung, der jeweils mit einer Mehrzahl an Innenöffnungen 90 versehen ist.

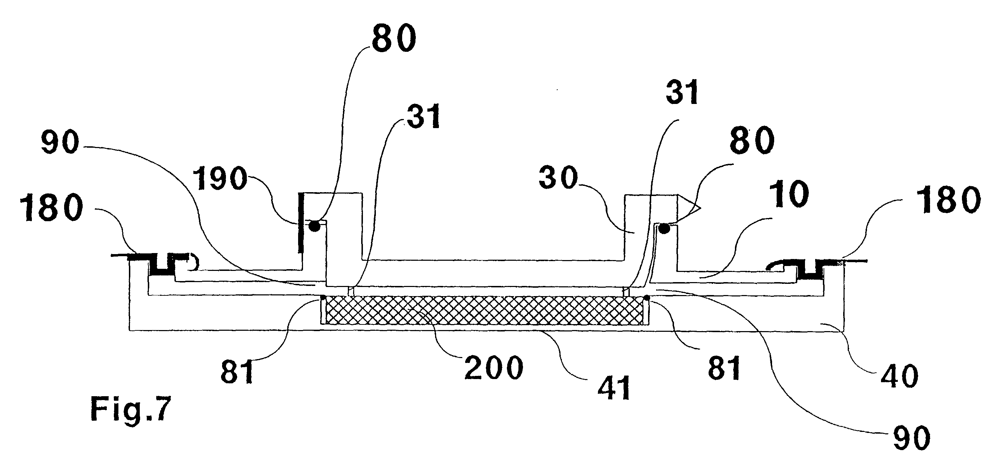

Das in Fig. 7 gezeigte fünfte Ausführungsbeispiel weist am Boden 41 eine Vertiefung zur Aufnahme eines Objektträgers 200 auf. Eine umlaufende zweite Dichtung 81 dichtet den Objektträger gegen die im Boden 41 vorgesehene Vertiefung ab.

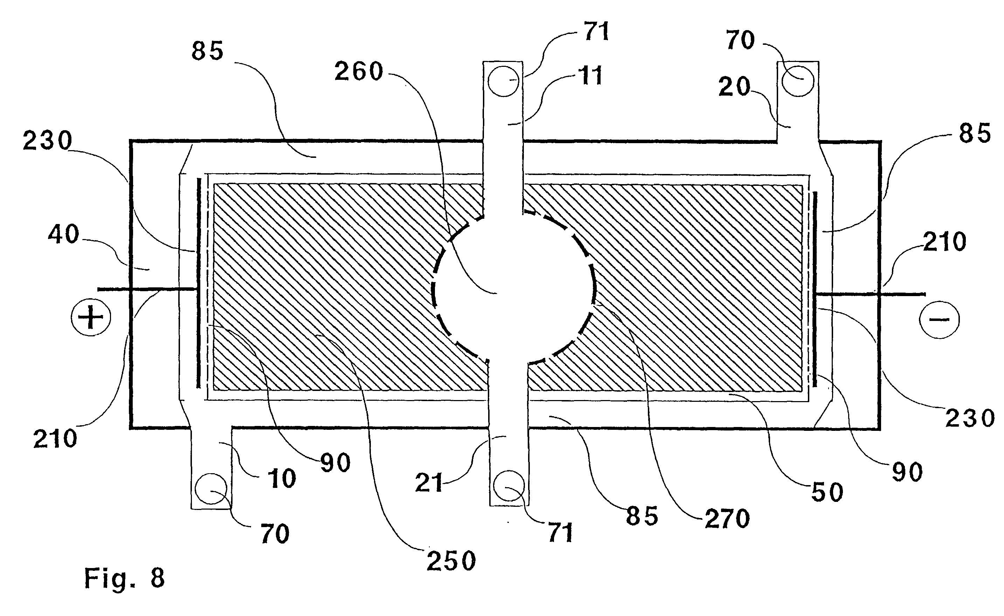

Bei dem aus Fig. 8 ersichtlichen sechsten Ausführungsbeispiel ist der Reagenzkanal 85 umlaufend ausgebildet, d.h. er steht sowohl mit dem ersten 10 als auch mit dem zweiten Stutzen 20 in Verbindung. Im Bereich der kurzen Seitenwände des Präparationsraums 50 sind im Reagenzkanal 85 Kondensatorplatten 230 angeordnet. Die Innenöffnungen 90 befinden sich gegenüberliegend zu den Kondensatorplatten 230. Im Präparationsraum 50 ist ein Gelblock 250 aufgenommen, der durch eine permeable Barriere 270 von einem Präparationsbereich 260 getrennt ist.

Der Präparationsbereich 260 ist mit zweiten Außenöffnungen 71 versehenen dritten 11 und vierten Stutzen 21 verbunden.

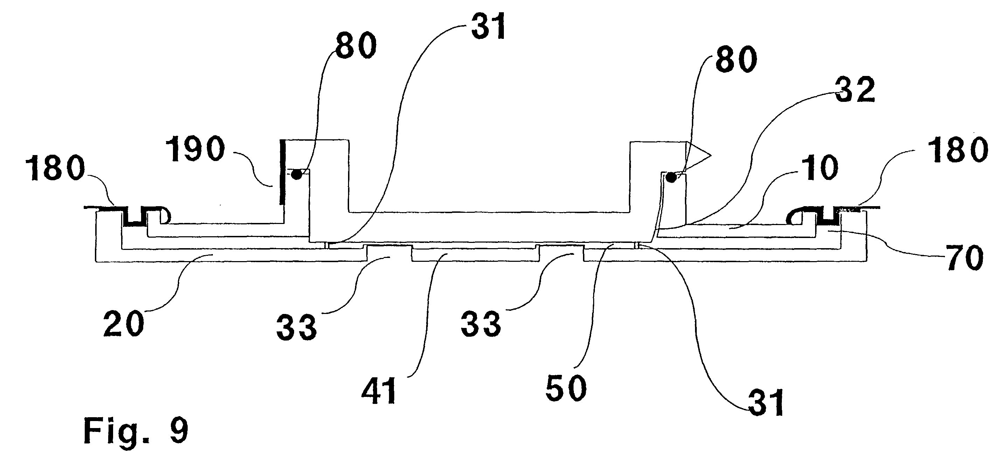

Bei dem in Fig. 9 gezeigten siebten Ausführungsbeispiel weist der Boden 41 Ausnehmungen 33 zur Aufnahme eines Permanentmagneten auf. Im Bereich der Ausnehmungen 33 ist der Boden besonders dünn ausgebildet und springt geringfügig in den Präparationsraum 50 vor.

### Bezugszeichenliste

- 10: erster Stutzen
- 11: dritter Stutzen
- 20: zweiter Stutzen
- 21: vierter Stutzen
- 30: Deckel
- 31: Abstandshalter
- 32: Radius
- 33: Ausnehmung
- 40: Grundkörper
- 41: Boden
- 50: Präparationsraum
- 60: Verriegelungselement
- 70: erste Außenöffnung
- 71: zweite Außenöffnung
- 80: erste Dichtung
- 81: zweite Dichtung
- 85: Reagenzkanal
- 90: Innenöffnung
- 100: Vorsprung
- 180: Schnappdeckel
- 190: Scharnier
- 200: Objektträger
- 210: Anschluß
- 230: Kondensatorplatte
- 240: Elektrode
- 250: Gelblock
- 260: Präparationsbereich
- 270: permeable Barriere

## Patentansprüche

1. Vorrichtung zur Untersuchung von biologischen oder medizinischen Proben wie Nucleinsäuren, Gewebe und dgl., bei der ein Deckel zum dichten Verschließen eines in einem Grundkörper (40) gebildeten Präparationsraums (50) vorgesehen ist, wobei der Präparationsraum (50) mit mindestens einer ersten Durchführung (10, 20) verbunden ist, durch die bei geschlossenem Deckel Substanz in den Präparationsraum (50) einschleusbar bzw. aus diesem entfernbar ist, **dadurch gekennzeichnet,** daß der Deckel (30) an der dem Präparationsraum (50) zugewandten Innenseite einen Vorsprung (100) mit Abstandshaltern (31) aufweist, über die der Deckel im geschlossenen Zustand gegen den Boden (41) des Grundkörpers (40) abstützbar ist.

2. Vorrichtung nach Anspruch 1, wobei der Deckel (30) ein zumindest abschnittsweise durchsichtig ausgebildeter mit dem Grundkörper (40) schwenkbar verbundener Deckel (30) ist.

3. Vorrichtung nach Anspruch 1 oder 2, wobei der Grundkörper (40) zumindest abschnittsweise aus lichtdurchlässigem Material hergestellt ist.

4. Vorrichtung nach einem der Ansprüche 1 bis 3, wobei die erste Durchführung (10, 20) verschließbar ist.

5. Vorrichtung nach einem der vorhergehenden Ansprüche, wobei der Boden (41) des Grundkörpers aus einem Material hergestellt ist, dessen Wärmeleitfähigkeit höher als die des Deckelmaterials ist.

6. Vorrichtung nach Anspruch 5, wobei am Boden (41) eine Heiz- und/oder Kühleinrichtung vorgesehen ist.

7. Vorrichtung nach einem der Ansprüche 5 oder 6, wobei der Boden (41) Ausnehmungen zur Aufnahme eines Magneten aufweist.

8. Vorrichtung nach einem der vorhergehenden Ansprüche, wobei am Grundkörper (40) Elektroden (240) oder Kondensatorplatten (230) vorgesehen sind.

9. Vorrichtung nach Anspruch 8, wobei die Elektroden (240) oder die Kondensatorplatten (230) in gegenüberliegender Anordnung im Grundkörper (40) vorgesehen sind.

10. Vorrichtung nach einem der vorhergehenden Ansprüche, wobei im Präparationsraum (50) ein Gelblock (250) vorgesehen ist, der einen durch eine permeable Barriere (270) getrennten Präparationsbereich (260) aufweist.

11. Vorrichtung nach Anspruch 10, wobei mindestens eine zweite Durchführung (11, 21) vorgesehen ist, durch die bei geschlossenem Deckel (30) Substanz in den Präparationsbereich (260) einschleusbar bzw. aus diesem entfernbar ist.

## Claims

1. Device for analyzing biological or medical specimens, such as nucleic acids, tissue and the like, in which a lid is provided for the leaktight closure of a preparation chamber (50) formed in a basic body (40), the preparation chamber (50) being connected to at least one first duct (10, 20), through which substance can be introduced into and removed from the preparation chamber (50) when the lid is closed, characterised in that the lid (30) has, on the inside facing the preparation chamber (50), a projection (100) with spacers (31), via which the lid, when in the closed state, can be supported against the bottom (41) of the basic body (40).

2. Device according to claim 1, wherein the lid (30) is designed to be transparent, at least in portions, and which is pivotably connected to the basic body (40).

3. Device according to claim 1 or 2, wherein the basic body (40) is produced, at least in portions, from translucent material.

4. Device according to one of claim 1 to 3, wherein the first duct (10, 20) is closable.

5. Device according to one of the preceding claims, wherein the bottom (41) of the basic body is produced from a material, the thermal conductivity of which is higher than that of the lid material.

6. Device according to claim 5, wherein a heating and/or cooling means is provided on the bottom (41).

7. Device according to one of claim 5 or 6, wherein the bottom (41) has recesses for receiving a magnet.

8. Device according to one of the preceding claims, wherein electrodes (240) of capacitor plates (230) are provided on the basic body (40).

9. Device according to claim 8, wherein the electrodes (240) or the capacitor plates (230) are provided in a mutually opposite arrangement in the basic body (40).

10. Device according to one of the preceding claims, wherein a gel block (250) is provided in a preparation chamber (50), said gel block having a preparation area (260) separated by a permeable barrier (270).

11. Device according to claim 10, wherein at least one second duct (11, 21) is provided, through which substance can be introduced into and removed from the preparation area (260) when the lid (30) is closed.

## Revendications

1. Dispositif pour l'examen d'échantillons biologiques ou médicaux comme des acides nucléiques, des tissus et d'autres substances, dans lequel il est prévu un couvercle pour la fermeture étanche d'un espace de préparation (50) formé dans un corps de base (40), l'espace de préparation (50) étant relié à au moins un premier passage (10, 20) par lequel, lorsque le couvercle est fermé, une substance peut être introduite par éclusage dans l'espace de préparation (50) ou peut être enlevée de celui-ci, caractérisé en ce que le couvercle (30) comporte sur le côté intérieur tourné vers l'espace de préparation (50) une partie en saillie (100) avec des éléments d'écartement (31) par l'intermédiaire desquels le couvercle à l'état fermé peut être appuyé contre le fond (41) du corps de base (40).

2. Dispositif selon la revendication 1, dans lequel le couvercle (30) est un couvercle (30) conçu transparent au moins par sections et assemblé au corps de base (40) de manière à pouvoir pivoter.

3. Dispositif selon la revendication 1 ou 2, dans lequel le corps de base (40) est fabriqué au moins par sections en un matériau laissant passer la lumière.

4. Dispositif selon l'une des revendications 1 à 3, dans lequel le premier passage (10, 20) peut être fermé.

5. Dispositif selon l'une des revendications précédentes, dans lequel le fond (41) du corps de base est fabriqué en un matériau dont la conductibilité thermique est supérieure à celle du matériau du couvercle.

6. Dispositif selon la revendication 5, dans lequel un dispositif de chauffage et/ou de refroidissement est prévu sur le fond (41).

7. Dispositif selon l'une des revendications 5 ou 6, dans lequel le fond (41) comporte des évidements pour loger un aimant.

8. Dispositif selon l'une des revendications précédentes, dans lequel des électrodes (240) ou des armatures de condensateur (230) sont prévues sur le corps de base (40).

9. Dispositif selon la revendication 8, dans lequel les électrodes (240) ou les armatures de condensateur (230) sont prévues dans un agencement face à face dans le corps de base (40).

10. Dispositif selon l'une des revendications précédentes, dans lequel il est prévu dans l'espace de préparation (50) un bloc de gel (250) qui comporte une zone de préparation (260) séparée par une barrière perméable (270).

11. Dispositif selon la revendication 10, dans lequel il est prévu au moins un deuxième passage (11, 21) par lequel, lorsque le couvercle (30) est fermé, une substance peut être introduite par éclusage dans la zone de préparation (260) ou peut être enlevée de celui-ci.
